# EUROPEAN PATENT APPLICATION

(11) **EP 3 142 272 A1**
(43) Date of publication of application: **15.03.2017**
(21) Application number: 15184645.8
(22) Date of filing: 10.09.2015
(51) Int. Cl.: H04H 60/43, H04H 60/25, H04H 60/51

(54) **RADIO SYSTEM AND METHOD FOR CREATING A STATION LIST**

(71) Applicant: Harman Becker Automotive Systems GmbH, 76307 Karlsbad (DE)
(72) Inventor: Schmauderer, Philipp, 75339 Höfen (DE); Hoenicke, Alexander, 76229 Karlsruhe (DE); Benz, Christoph, 77797 Ohlsbach (DE)
(74) Representative: Westphal, Mussgnug & Partner Patentanwälte mbB

(57) **Abstract**

A method for creating a station list for display in a radio system includes creating a station profile of at least one radio station, the station profile comprising at least one of geographical information, alternative frequencies, a Program Identification Code and Radio Data System data of the respective radio station, storing the at least one station profile and creating the station list based on a station profile of a currently received radio station and the at least one stored station profile.

## Description

### TECHNICAL FIELD

The disclosure relates to a radio system and a method for creating a station list, in particular for creating a station list in single tuner systems.

### BACKGROUND

Radio systems today are often equipped with displays to provide a list of currently available radio stations to a user. Such station lists usually contain more information than merely the frequencies of the available radio stations. For example, displayed information may further include Radio Data System (RDS) information, such as station name or program type. In dual tuner systems, a first tuner processes audio signals while a second tuner performs background scanning, so that the station list may be updated regularly without any interruptions of the radio broadcast. Systems with two, or even more, tuners, however, are more costly than single tuner systems. In single tuner systems, an update of the list often requires a muting of the radio for a certain time. Such muting periods commonly do not go unnoticed by the user.

### SUMMARY

The method described herein includes the following procedures: creating a station profile of at least one radio station, the station profile comprising at least one of geographical information, alternative frequencies, a Program Identification Code, and radio data system data of the respective radio station; storing the at least one station profile; creating the station list based on a station profile of a currently received radio station and the at least one stored station profile.

A radio system comprises: a tuner configured to receive radio stations and to provide an audio signal representative of the radio stations; and a processing unit configured to create a station profile of at least one radio station, the station profile comprising at least one of geographical information, alternative frequencies, a Program Identification Code, and Radio Data System data of the respective radio station, to store the at least one station profile, and to create a station list based on a station profile of a currently received radio station and the at least one stored station profile.

Other systems, methods, features and advantages will be or will become apparent to one with skill in the art upon examination of the following detailed description and figures. It is intended that all such additional systems, methods, features and advantages be included within this description, be within the scope of the invention and be protected by the following claims.

### BRIEF DESCRIPTION OF THE DRAWINGS

The method may be better understood with reference to the following description and drawings. The components in the figures are not necessarily to scale, emphasis instead being placed upon illustrating the principles of the invention. Moreover, in the figures, like referenced numerals designate corresponding parts throughout the different views.
Figure 1 is a schematic diagram of an exemplary radio system.
Figure 2 is a schematic diagram of a radio system.
Figure 3 illustrates station profiles, stored in a radio system.
Figure 4 is a flowchart of an exemplary method for creating a station list

### DETAILED DESCRIPTION

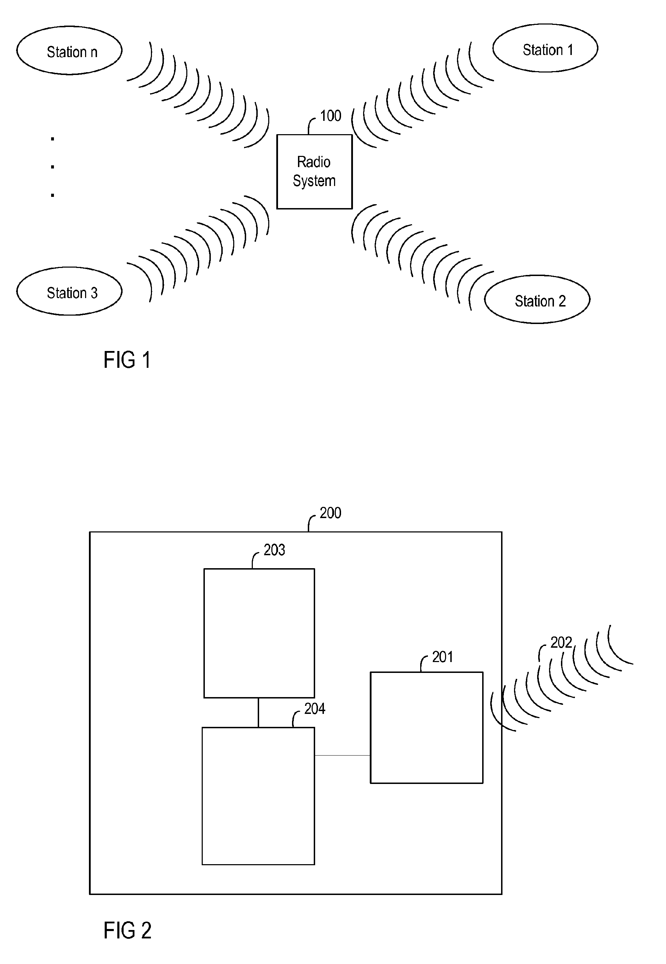

Radio systems are often equipped with a display. On the display a station list may be provided to inform the user about currently available radio stations. Especially when using a radio system in a vehicle, such station lists may change as the vehicle drives along and changes its geographical position. Referring to Figure 1, a radio system 100 may receive several different radio stations 1, 2, 3,..., n at a certain geographical location. When a radio system 100 changes its geographical location, however, other radio stations may become available, while some radio stations may no longer be available. A station list therefore may be updated regularly to provide users with up-to-date information.

In dual tuner systems a first tuner may process audio signals while a second tuner performs background scanning, so that the station list may be updated regularly without any interruptions of the radio broadcast. Due to cost requirements, however, many radio systems only comprise a single tuner.

Referring to Figure 2, a single tuner radio system 200 is illustrated. The single tuner 201 of the radio system 200 is configured to receive radio stations 202 and to provide an audio signal representative of the radio stations. The single tuner 201 may further be configured to perform a scan of the FM broadcast band. By scanning the FM broadcast band, currently receivable radio stations 202 may be determined. The radio system 200 may include a processing unit 204, which is configured to create a station list. The station list may be displayed on a display 203 of the radio system 200, for example. Scanning of the FM broadcast band may be performed without the user noticing any interruptions, if the scanning is performed when the radio system 200 is not in a radio operation mode. This is the case when the user is listening to other audio sources (e.g. CD, MP3), when the radio system 200 is muted (e.g. when the user is using built-in hands-free equipment to make phone calls or when the vehicle is in reverse and the park distance control warns the user of objects by means of an acoustic signal) or when the radio system 200 is shut down, for example.

Whenever it is possible to perform a scan without interrupting a radio broadcast, the processing unit 204 may create station profiles of one or more radio stations and may link the station profiles to a corresponding geographical location. The station profiles per location may be stored. The processing unit 204 may include internal storage means (non limiting examples: a memory, database or random access memory) in which the station profiles may be stored. However, it is also possible to store the station profiles in external storage means, for example.

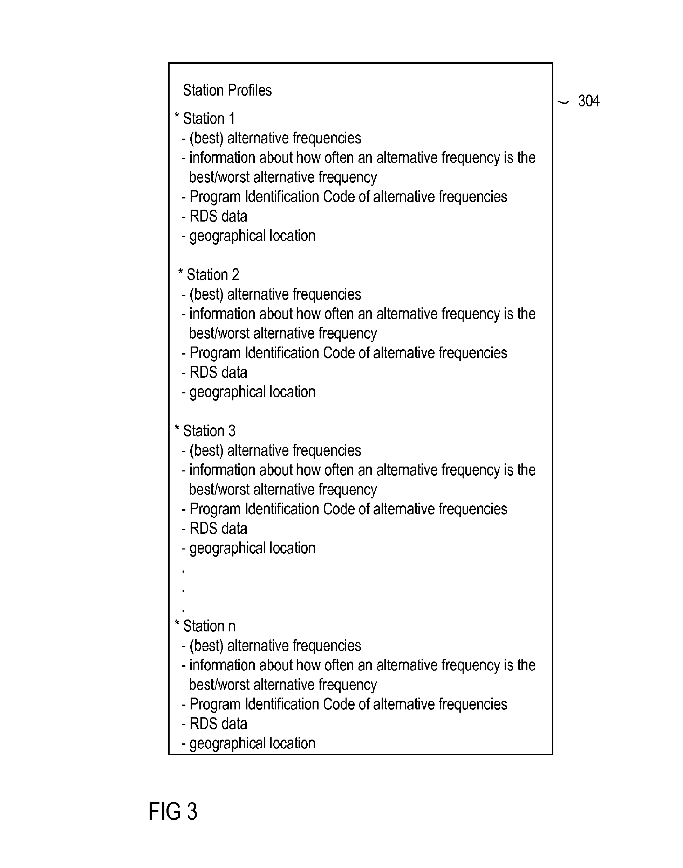

Referring to Figure 3, a station profile may comprise further information concerning the respective radio station. Usually, so called Radio Data System (RDS) data is transmitted together with a radio broadcast. Such RDS data may include a specific program identification (PI) code, information about alternative frequencies and a program type of the respective radio station, for example. Generally, a radio station may be received on several different alternative frequencies. Alternative frequencies allow the tuner to re-tune to a different frequency providing the same radio station when a first signal becomes too weak (e.g. when moving out of range). A PI code identifies the respective radio station, and the indication of the program type allows users to find radio stations of a certain genre. The station profile may further comprise more detailed information about alternative frequencies. More detailed information may be available for radio stations a user regularly listens to, for example. The radio system may then add information concerning which alternative frequencies usually have very good or very poor reception, for example. A sequence of alternative frequencies may be stored that are often used for a certain radio station and usually have a good reception.

Further, the PI code for each alternative frequency may be stored in the station profile. Usually, alternative frequencies of a radio station have the same PI code. However, there may be some alternative frequencies that have a different PI code. The station profile may therefore comprise information about the quality and chronological sequence of alternative frequencies of a radio station. Information stored in the station profiles is not restricted to the examples given above. Any other information may be stored in the station profile of a radio station.

Station profiles may further be linked to geographical locations. A geographical location may be determined using GPS (global positioning system), for example. As another example, geographical information also may be included in the PI code of a radio station, for example. The PI code is a unique code that identifies a radio station. The PI code usually contains a country prefix and may further contain a code that specifies a certain region within the country. As a further example, it is also possible to determine a geographical location based on the alternative frequencies that are currently available. A radio station may be available on a first, second and third frequency in a first region. In a second region, the same radio station may be available on the first frequency as well as on a fourth and fifth frequency. In the given example, if the radio station at a certain time is available on the first, second and third frequencies, the radio system knows that it is in the first region.

When a user is listening to a certain radio station, a station profile as has been explained above may be created for this radio station. If a station profile for a certain radio station already exists, it may be updated using newly collected data, for example. The newly created or updated station profile may then be compared to other station profiles that are stored in the radio system. Based on the current geographic position and the station profiles stored in the radio system, a corresponding station list may be created and displayed, without the need to do any further scanning. The station list that is created based on the stored station profiles may include such radio stations that are receivable at the current geographic location. The station list, therefore, may be created based on stored information when a scan is not possible without interrupting a current radio broadcast.

The radio system is an adaptive system. The more scans it performs, the more station profiles may be created and the more information may be stored in the station profiles. For routes a vehicle takes regularly (e.g., to and from work) more information may be available than for routes that are seldom or never used. The station list that is created based on the station profiles may have more entries in well known regions and may have no or only few entries in unknown regions.

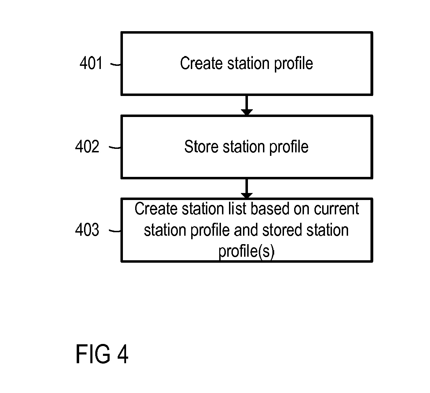

Referring to Figure 4, a method for creating a station list is illustrated. A station profile is created for at least one radio station (procedure 401). A station profile may be created whenever possible, without disturbing a radio broadcast, for example. The station profile may include information about a current geographical location. The profile may also include information about alternative frequencies of the respective radio station, a Program Identification Code or Radio Data System Data, for example. The station profile may be stored in the radio System (procedure 402). When a user listens to a certain radio station, a station list may be created based on the station profile of the current radio station and the station profiles stored in the radio system (procedure 403). As geographical information is stored in a station profile, a current geographical location may be compared with the stored geographical information of other station profiles. It may then be determined which other radio stations may be received at the current geographical location. The station list that is created may be displayed on a display of the radio system. The displayed station list may include information about currently receivable radio stations. Such information may include the frequency, the names and/or the genre of the radio stations, for example.

A radio station may be listed in the station list when at least one alternative frequency of the radio station offers acceptable reception at the current geographical location. Information about alternative frequencies of a radio station may be stored in the station profile of a radio station, but may not be displayed with the station list, for example. When a user selects a certain radio station, the radio system may independently choose a frequency that offers acceptable reception of the chosen radio station. It is, however, possible to display alternative frequencies, so that the user can manually choose an appropriate frequency.

While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for creating a station list for display in a radio system (200), the method comprising:
creating a station profile of at least one radio station (1, 2, 3,..., n), the station profile comprising at least one of
geographical information,
alternative frequencies,
a Program Identification Code, and
Radio Data System data
of the respective radio station (1, 2, 3,..., n);
storing the at least one station profile;
creating the station list based on a station profile of a currently received radio station (1, 2, 3,..., n) and the at least one stored station profile.

2. The method of claim 1, further comprising
determining a current geographical location of the radio system (200)

3. The method of claim 2, wherein creating the station list comprises comparing the current geographical location and the geographical information of the stored station profiles.

4. The method of claim 2 or 3, wherein the station list comprises at least one radio station (1, 2, 3,..., n) that may be received at the current geographical location of the radio system (200).

5. The method of any of the preceding claims, wherein the geographical information is determined by means of currently available alternative frequencies of a radio station (1, 2, 3,..., n).

6. The method of any of the preceding claims, wherein a station profile comprises additional information about alternative frequencies of the respective radio station (1, 2, 3,..., n), the additional information comprising at least one of the quality of reception of alternative frequencies at certain geographical locations and the Program Identification Code of each alternative frequency.

7. The method of any of the preceding claims, wherein a station profile is created while
the radio system (200) is in an operation mode that is not a radio mode,
the radio system (200) is muted,
the radio system (200) is turned off, or
when radio reception is switched from one radio station (1, 2, 3,..., n) to another radio station (1, 2, 3,..., n).

8. The method of any of the preceding claims, further comprising displaying the station list (203) on a display of the radio system (200).

9. The method of any of the preceding claims, wherein the station list (203) comprises at least one of the name, the frequency and the genre of each of the currently receivable radio stations (1, 2, 3,..., n).

10. A computer program configured to execute the method of any of claims 1 to 9.

11. A radio system (200) comprising
a tuner (201) configured to receive radio stations and to provide an audio signal representative of the radio stations; and
a processing unit (204) configured to create a station profile of at least one radio station (1, 2, 3,..., n), the station profile comprising at least one of
geographical information,
alternative frequencies,
a Program Identification Code, and
Radio Data System data
of the respective radio station (1, 2, 3,..., n),
store the at least one station profile, and
create a station list based on a station profile of a currently received radio station (1, 2, 3,..., n) and the at least one stored station profile.

12. The radio system (200) of claim 11, further comprising a display (203), which is configured to display the station list.
